# EUROPÄISCHE PATENTSCHRIFT

(11) **EP 1 134 060 B1**
(45) Veröffentlichungstag und Bekanntmachung des Hinweises auf die Patenterteilung: **04.08.2004**
(21) Anmeldenummer: 01105441.8
(22) Anmeldetag: 13.03.2001
(51) Int. Cl.: B28B 7/38

(54) **Betonentschalungsmittel**
Concrete release agent
Agent de démoulage pour béton

(30) Priorität: 14.03.2000 DE 10012372
(43) Veröffentlichungstag der Anmeldung: 19.09.2001
(73) Patentinhaber: Nordisk Bygge Kemi A/S, 6230 Rodekro (DK)
(72) Erfinder: Schmuck, Manfred, 45289 Essen (DE); Roos, Markus, 45289 Essen (DE); Hansen, Herluf, 6200 Aabenraa (DK); Yde, Elo, 6100 Haderslev (DK)
(74) Vertreter: HOFFMANN - EITLE

(56) Entgegenhaltungen:
- EP-A- 0 328 158
- WO-A-97/34749
- DE-A- 4 422 470
- "Ullmann's Encyclopedia of Industrial Chemistry" 1993 , VCH PUBLISHER, INC. XP002217828 Vol. A23, Seite 67-72 * Kapitel 2.1, 2.3 und 2.4 *

## Beschreibung

Die Erfindung betrifft Betonentschalungsmittel, insbesondere auf der Basis biologisch abbaubarer Öle, sowie ihre Herstellung.

Bei der Herstellung von Betonbauteilen und Betonbauten ist infolge der weichplastischen Beschaffenheit des frischen Betons eine Verwendung von Formen erforderlich. Diese Formen bestehen meist aus Holz, beschichtetem Holz und Metallkonstruktionen. Zur Verhinderung des Anhaftens von erhärtetem Beton an diesen Formen bei der Entformung verwendet man Entformungsmittel, welche üblicherweise Betonentschalungsmittel oder Betontrennmittel genannt werden. Als Betonentschalungsmittel haben sich bisher in der Praxis zwei verschiedene Typen durchgesetzt, und zwar solche auf öliger Basis und auf Basis wasserverdünnbarer Emulsionen. Viele Betonentschalungsmittel basieren noch auf Mineralölen.

Es ist bekannt, dass übliche Mineralöle ein potentielles Gesundheitsrisiko beinhalten. Außerdem sind diese oft nur sehr schlecht biologisch abbaubar. Vielfach werden Mineralöle noch mit Lösemitteln verdünnt, um eine bevorzugte Verarbeitungsviskosität von 20 mm²/sek. zu erhalten. Deshalb stellen Mineralöle als solche oder mit Lösemittel verdünnte Lösungen oder Emulsionen ein beträchtliches Gesundheitsrisiko dar. Die Anforderungen an ein umweltverträgliches Betontrennmittel sind in Deutschland in der RAL UZ 64 "Biologisch schnell abbaubare Schmierstoffe und Schalöle" von Juni 1991 festgelegt.

In der Literatur wird der Zusatz von Fettsäuren, vorzugsweise Ölsäure, Fettsäureestern, Fettalkoholen und verseifbaren Harzen zu Betonentschalungsmitteln auf Basis von Mineralölen empfohlen. Dies hat zur Folge, dass nach dem Entschalen auf der Oberfläche des Betons und der Form meist feiner hydrophober Staub entsteht. Dieser hydrophobe Staub, der insbesondere durch die genannten Zusätze entsteht, verbessert deutlich die Trennwirkung; der Staub muss aber in einem zusätzlichen Arbeitsgang entfernt werden. Es muss nicht nur die Form gesäubert werden sondern auch der Beton, bevor er weiter behandelt wird. Hierbei handelt es sich um arbeitsintensive Vorgänge.

Es besteht also verstärkt Bedarf an biologisch gut abbaubaren Trennmitteln, die nicht die Nachteile der Oberflächenmängel und Absanden zeigen.

Die EP 0 180 630 B1 beschreibt die Verwendung von Rüböl in Kombination mit Esterölen (in Mengen > 25 Gew.-%) und die Herstellung von Emulsionen daraus. Für die Herstellung der Emulsionen werden nichtionogene und anionische Emulgatoren eingesetzt. Das Esteröl dient in erster Linie dazu, die Viskosität des Rüböls zu senken. Bei Verwendung dieses Trennmittels kommt es zum Anhaften des Betons im Formkörper mit den Nachteilen wie Beschädigung der Betonoberfläche und Betonresten in der Form.

In der WO 97/34749 wird die Verwendung eines reinen Polysiloxans als Formentrennmittel empfohlen. Gleichzeitig soll das Siloxan die Oberfläche von Beton, Mörtel, Zement oder ähnliches wasserabweisend ausrüsten. Dieses Verfahren ist, bei Betrachtung der aufzubringenden Mengen an Polysiloxan, unwirtschaftlich. Außerdem haftet nach dem Entformen sehr viel Polysiloxan an der Betonoberfläche, so dass ein nachträgliches Beschichten derselben zu Haftungsstörungen der Farben und Lacke führt.

Es war ein erfindungsgemäßes Ziel, ein umweltfreundliches Betonentschalungsmittel bereitzustellen, das die Nachteile des Standes der Technik nicht aufweist und das insbesondere gute Anwendungseigenschaften besitzt und wirtschaftlich einsetzbar ist.

Überraschenderweise wurde nun gefunden, dass dieses Ziel mit einem Betonentschalungsmittel auf der Basis eines Gemisches aus Öl-Komponente und Fettsäure bzw. Fettsäurederivaten erreicht werden kann, wobei das Betonentschalungsmittel zusätzlich ein Alkylpolysiloxan der allgemeinen Formel I enthält, 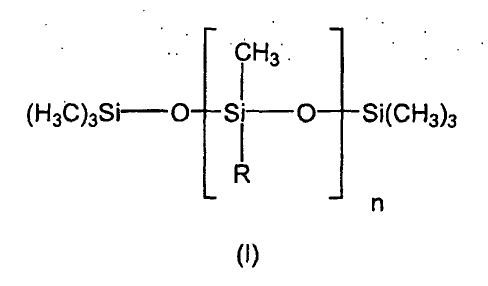 worin n eine ganze Zahl von 8 bis 148 und R H oder einen organischen Rest mit 4 bis 50 C-Atomen bedeutet, wobei das Alkylpolysiloxan erhältlich ist durch Umsetzung eines α-Olefin mit 4 bis 50 C-Atomen mit Methylhydrogenpolysiloxan einer Kettenlänge von 10 bis 150 Si-Einheiten und 30 bis 100% des Wasserstoffs aus dem Methylhydrogenpolysiloxan mit dem α-Olefin umgesetzt worden sind, wobei der Anteil des Alkylpolysiloxans 0,1 bis 10 Gew.-%, bezogen auf die Ölkomponente beträgt. Der organische Rest R ist vorzugsweise ausgewählt aus ggf. substituierten Alkyl-, Alkenyl-, und Arylalkylgruppen.

Bei dem Alkylpolysiloxan mit Formel (I) handelt es sich vorzugsweise um ein Umsetzungsprodukt aus einem α-Olefin mit 12 bis 16, insbesondere 14 C-Atomen. Dementsprechend ist R in Formel I bevorzugt ein organischer Rest mit 12 bis 16, insbesondere 14 C-Atomen.

Gemäß einer weiteren bevorzugten Ausführungsform besitzt das für die Herstellung des Alkylpolysiloxans verwendete Methylhydrogenpolysiloxan eine Kettenlänge von 40 bis 60 Si-Einheiten. Die Zahl n in Formel I des unter Verwendung dieses bevorzugten Methylhydrogenpolysiloxans erhältlichen Alkylpolysiloxans ist entsprechend eine ganze Zahl von 38 bis 58.

Erfindungsgemäß werden 30 bis 100 % des Wasserstoffs aus dem Methylhydrogenpolysiloxan mit dem α-Olefin umgesetzt. Bei der Umsetzung des α-Olefins mit dem Methylhydrogenpolysiloxan ist es im Sinne der vorliegenden Erfindung besonders bevorzugt, die Umsetzung weitgehend mit äquivalenten Mengen durchzuführen.

Das in der Umsetzung mit dem Methylhydrogenpolysiloxan verwendbare α-Olefin ist eine beliebige organische Verbindung mit einer terminalen Doppelbindung. Der Begriff "α-Olefin" im Sinne der Erfindung umfasst auch beliebige Mischungen von α-Olefinen. Bevorzugte α-Olefine umfassen beispielsweise Styrolderivate allein oder in Kombination mit weiteren α-Olefinen.

Die erfindungsgemäßen Betonentschalungsmittel ermöglichen ein staub- und rückstandsfreies Trennen von Betonschalungen. Die Betontrennmittel sind vorzugsweise Öl-in-Wasser-Emulsionen, die nichtionische und/oder ionische Emulgatoren enthalten. Es können aber auch Wasser-in-Öl-Emulsionen sowie Mikroemulsionen sein.

Um die erfindungsgemäßen Betonentschalungsmittel in eine anwendbare Form zu bringen, können sie emulgiert oder selbstemulgierend eingestellt werden. Darüber hinaus können auch noch Frostschutzmittel, Korrosionsinhibitoren, Härtungsverzögerer, Stabilisierungsmittel und Hydrophobierungsmittel zugesetzt werden.

In einer weiteren bevorzugten Ausführungsform der vorliegenden Erfindung ist das Betonentschalungsmittel dadurch gekennzeichnet, dass es die Öl-Komponente in einer Menge von 5 bis 75 Gew.-%, vorzugsweise 20 bis 40 Gew.-%, enthält. Diese Gewichtsangabe bezieht sich insbesondere auf die Verwendung von wässrigen Emulsionen. Wenn die Menge der Ölkomponente zu gering gewählt wird, ist eine ausreichende Formtrennung nicht möglich.

Besonders bevorzugt im Sinne der vorliegenden Erfindung werden als Öl-Komponente Triglyceride, insbesondere Rüböl oder Fischöl eingesetzt. Der besondere Vorzug dieser Öl-Komponenten liegt in der biologischen Abbaubarkeit. Die erfindungsgemäß eingesetzten Fettsäure-Derivate umfassen Fettsäureester auf der Basis aliphatischer Carbonsäuren mit 4 bis 30 C-Atomen. Die AlkoholKomponente in den Estern wird vorzugsweise aus einem ein- oder zweiwertigen Alkohol mit 1 bis 22 C-Atomen, oder 2 bis 22 C-Atomen, gebildet. Es ist erfindungsgemäß bevorzugt, als Fettsäure-Derivate entsprechende Fettalkohole mit einer Kettenlänge einzusetzen, die dem Fettsäurerest der oben genannten Verbindungen entspricht.

Besonders bevorzugt im Sinne der vorliegenden Erfindung wird Ölsäure als Fettsäure eingesetzt.

Im Sinne der vorliegenden Erfindung beträgt der Anteil der Fettsäurederivate vorzugsweise 0,1 bis 20, insbesondere 1 bis 10 Gew.-%, bezogen auf die Ölkomponente.

### Ausführungsbeispiele

### Beispiel 1)

200g Rapsöl wurde mit
12 g Ölsäure,
15 g Polyoxyethylenglyceryloleat (Tagat® 02)
5 g Polyoxyethylenglyceryloleoricinolat (Tagat® V 20)
3 g Rostschutz (Texamin® PD 1)
40 g Monopropylenglykol ( Frostschutz )
1 g Konservierungsmittel (Mergal® K6N)
5g Umsetzungsprodukt aus C14 α-Olefin und Methylhydrogenpolysiloxan (Sitren® 621) Kettenlänge des Methylhydrogenpolysiloxans 40 - 50 Si-Einheiten und
718 g Wasser gemischt und anschließend mit einem Homogenisator emulgiert.

Es entstand eine stabile Emulsion mit Teilchendurchmesser von 0,2 bis 1µm.

### Beispiel 2)

165 g Fischöl wurde mit
35 g Octylcocoat,
12 g Methyloleat,
14 g Alkylpolyglykolammoniummethylchlorid (Berol® 556),
6 g Tagat® V 20,
3 g Fettsäurealkanolamid (Comperlan® PD),
40 g Monopropylenglykol,
1 g Mergal® K6N,
5 g Sitren® 621 und
718 g Wasser gemischt und mit einem Dissolver emulgiert.

Es entstand eine stabile Emulsion mit Teilchengrößen von 0,2 bis 1µm.

Die Prüfung der Wirksamkeit wurde folgendermaßen durchgeführt :
In Metallformen wurden 15 g/m² der Emulsion mit einer Kunststoffrolle aufgebracht. Nach Abtrocknen des Wassers wurde die Form mit Beton der Güteklasse B 35 gefüllt. Nach einer Aushärtungszeit von 24 Stunden wurde der Betonkörper entformt.

Die Betonoberfläche wies keine Verfärbungen auf, war lunkerfrei und glatt.

Die Form enthielt keine Beton- und Staubrückstände. Selbst nach 50maligem Gebrauch war die Form noch rückstands- und staubfrei.

## Patentansprüche

1. Betonentschalungsmittel auf der Basis eines Gemisches aus Öl-Komponente und Fettsäure bzw. Fettsäurederivaten, **dadurch gekennzeichnet, dass** das Mittel weiterhin ein Alkylpolysiloxan der allgemeinen Formel (I) enthält, 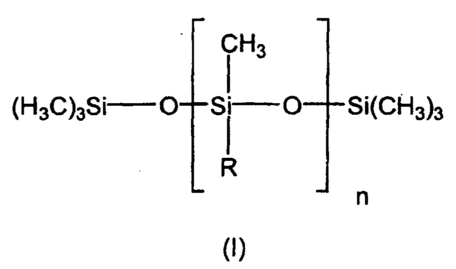 worin n eine ganze Zahl von 8 bis 148 und R H oder einen organischen Rest mit 4 bis 50 C-Atomen bedeutet, wobei das Alkylpolysiloxan erhältlich ist durch Umsetzung eines α-Olefins mit 4 bis 50 C-Atomen mit Methylhydrogenpolysiloxan einer Kettenlänge von 10 bis 150 Si-Einheiten und 30 bis 100% des Wasserstoffs aus dem Methylhydrogenpolysiloxan mit dem α-Olefin umgesetzt worden sind, wobei der Anteil des Alkylpolysiloxans 0,1 bis 10 Gew.-%, bezogen auf die Ölkomponente beträgt.

2. Betonentschalungsmittel nach Anspruch 1, **dadurch gekennzeichnet, dass** R in Formel (I) einen organischen Rest mit 12 bis 16, vorzugsweise 14 C-Atomen bedeutet und das Alkylpolysiloxan unter Einsatz eines α-Olefins mit 12 bis 16, vorzugsweise 14 C-Atomen erhältlich ist.

3. Betonentschalungsmittel nach einem der Ansprüche 1 oder 2, **dadurch gekennzeichnet, dass** n in Formel (I) eine ganze Zahl von 38 bis 58 bedeutet und das Methylhydrogenpolysiloxan eine Kettenlänge von 40 bis 60 Si-Einheiten aufweist.

4. Betonschalungsmittel nach einem der Ansprüche 1 bis 3, insbesondere in Form einer wässrigen Emulsion, **dadurch gekennzeichnet, dass** es die Öl-Komponente in einer Menge von 5 bis 75 Gew.-%, vorzugsweise 20 bis 40 Gew.-%, enthält.

5. Betonentschalungsmittel nach einem der Ansprüche 1 bis 4, **dadurch gekennzeichnet, dass** die Öl-Komponente Triglyceride, insbesondere Rüböl, oder Fischöl umfasst.

6. Betonentschalungsmittel nach einem der Ansprüche 1 bis 5, **dadurch gekennzeichnet, dass** der Anteil der Fettsäurederivate, bezogen auf die Öl-Komponente 0,1 bis 20, insbesondere 1 bis 10 Gew.-% beträgt.

7. Betonentschalungsmittel nach einem der Ansprüche 1 bis 6, **dadurch gekennzeichnet, dass** die Fettsäurederivate ausgewählt sind aus Fettsäureestern, insbesondere einer aliphatischen Carbonsäure mit 4 bis 30 C-Atomen und einem ein- oder zweiwertigen Alkohol mit 1 bis 22 oder 2 bis 22 C-Atomen, sowie Fettalkoholen.

8. Betonentschalungsmittel nach einem der Ansprüche 1 bis 7, **dadurch gekennzeichnet, dass** die Fettsäure Ölsäure umfasst.

## Claims

1. Concrete stripping agent based on a mixture of oil component and fatty acid or fatty acid derivatives, **characterised in that** the agent also contains an alkylpolysiloxane of the general formula (I), 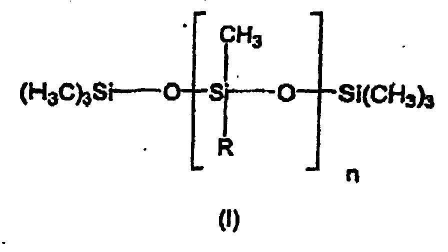 wherein n denotes a whole number from 8 to 148 and R denotes H or an organic radical having 4 to 50 C atoms, wherein the alkylpolysiloxane can be obtained by reacting an α-olefin having 4 to 50 C atoms with methyl hydrogen polysiloxane of chain length of 10 to 150 Si units and 30 to 100% of the hydrogen from the methyl hydrogen polysiloxane has been reacted with the α-olefin, wherein the proportion of alkylpolysiloxane is 0.1 to 10 wt.%, based on the oil component.

2. Concrete stripping agent according to claim 1, **characterised in that** R in formula (I) denotes an organic radical having 12 to 16, preferably 14, C atoms and the alkylpolysiloxane can be obtained using an α-olefin having 12 to 16, preferably 14, C atoms.

3. Concrete stripping agent according to one of claims 1 or 2, **characterised in that** n in formula (I) denotes a whole number from 38 to 58 and the methyl hydrogen polysiloxane has a chain length of 40 to 60 Si units.

4. Concrete stripping agent according to one of claims 1 to 3, in particular in the form of an aqueous emulsion, **characterised in that** it contains the oil component in a quantity of 5 to 75 wt.%, preferably 20 to 40 wt.%.

5. Concrete stripping agent according to one of claims 1 to 4, **characterised in that** the oil component includes triglycerides, in particular rape-seed oil, or fish oil.

6. Concrete stripping agent according to one of claims 1 to 5, **characterised in that** the proportion of fatty acid derivatives, based on the oil component, is 0.1 to 20, in particular 1 to 10, wt.%.

7. Concrete stripping agent according to one of claims 1 to 6, **characterised in that** the fatty acid derivatives are selected from fatty acid esters, in particular an aliphatic carboxylic acid having 4 to 30 C atoms and a monohydric or dihydric alcohol having 1 to 22 or 2 to 22 C atoms, as well as fatty alcohols.

8. Concrete stripping agent according to one of claims 1 to 7, **characterised in that** the fatty acid includes oleic acid.

## Revendications

1. Agent de démoulage pour béton à base d'un mélange de composant huileux et d'acide gras ou de dérivés d'acide gras, **caractérisé en ce que** l'agent contient en outre un alkylpolysiloxane de formule générale (I) : 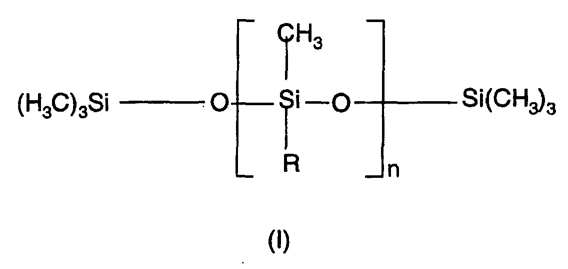 où n représente un nombre entier de 8 à 148 et R représente H ou un groupement organique ayant 4 à 50 atomes de carbone, où l'alkylpolysiloxane peut être obtenu par réaction d'une α-oléfine ayant 4 à 50 atomes de carbone avec un méthylhydrogénopolysiloxane d'une longueur de chaîne de 10 à 150 unités Si et 30 à 100 % de l'hydrogène du méthylhydrogénopolysiloxane ont été mis à réagir avec l'α-oléfine, où la proportion d'alkylpolysiloxane est de 0,1 à 10 % en masse par rapport au composant huileux.

2. Agent de démoulage pour béton selon la revendication 1, **caractérisé en ce que** R dans la formule (I) représente un groupement organique ayant 12 à 16, de préférence 14 atomes de carbone et l'alkylpolysiloxane peut être obtenu par l'utilisation d'une α-oléfine ayant 12 à 16, de préférence 14 atomes de carbone.

3. Agent de démoulage pour béton selon l'une des revendications 1 et 2, **caractérisé en ce que** n dans la formule (I) représente un nombre entier de 38 à 58 et le méthylhydrogénopolysiloxane présente une longueur de chaîne de 40 à 60 unités Si.

4. Agent de démoulage pour béton selon l'une des revendications 1 à 3, en particulier sous forme d'une émulsion aqueuse, **caractérisé en ce qu'**il contient le composant huileux en une quantité de 5 à 75 % en masse, de préférence de 20 à 40 % en masse.

5. Agent de démoulage pour béton selon l'une des revendications 1 à 4, **caractérisé en ce que** le composant huileux comprend des triglycérides, en particulier de l'huile de navette, ou de l'huile de poisson.

6. Agent de démoulage pour béton selon l'une des revendications 1 à 5, **caractérisé en ce que** la proportion des dérivés d'acide gras, par rapport au composant huileux, est de 0,1 à 20, en particulier de 1 à 10 % en masse.

7. Agent de démoulage pour béton selon l'une des revendications 1 à 6, **caractérisé en ce que** les dérivés d'acide gras sont choisis parmi les esters d'acide gras, en particulier d'un acide carboxylique aliphatique ayant 4 à 30 atomes de carbone et d'un alcool mono- ou difonctionnel ayant 1 à 22 ou 2 à 22 atomes de carbone, ainsi que les alcools gras.

8. Agent de démoulage pour béton selon l'une des revendications 1 à 7, **caractérisé en ce que** l'acide gras comprend de l'acide oléique.
